# EUROPÄISCHE PATENTSCHRIFT

(11) **EP 3 241 806 B1**
(45) Veröffentlichungstag und Bekanntmachung des Hinweises auf die Patenterteilung: **06.04.2022**
(21) Anmeldenummer: 17167126.6
(22) Anmeldetag: 19.04.2017
(51) Int. Cl.: C02F 1/44, B01D 61/14, B01D 63/02, C02F 1/50, C02F 1/68, B01D 35/04, C02F 1/76

(54) **ENDSTÄNDIGE FILTERVORRICHTUNG ZUR REDUKTION VON MIKROBIOLOGISCHEN VERUNREINIGUNGEN IN EINEM WÄSSRIGEN MEDIUM**
TERMINAL FILTER DEVICE FOR REDUCTION OF MICROBIOLOGICAL CONTAMINANTS IN AN AQUEOUS MEDIUM
DISPOSITIF DE FILTRE TERMINAL DESTINÉ À RÉDUIRE LES IMPURETÉS MICROBIOLOGIQUES DANS UN MILIEU AQUEUX

(30) Priorität: 03.05.2016 DE 102016108202
(43) Veröffentlichungstag der Anmeldung: 08.11.2017
(73) Patentinhaber: B. Braun Avitum AG, 34212 Melsungen (DE)
(72) Erfinder: MANDRY, Peter Dr., 01326 Dresden (DE)
(74) Vertreter: Winter, Brandl - Partnerschaft mbB

(56) Entgegenhaltungen:
- EP-A1- 1 369 385
- EP-B1- 1 038 570
- WO-A1-02/076589
- WO-A1-2014/196567
- JP-U- H0 639 145
- US-A- 4 636 307
- US-A- 5 045 198

## Beschreibung

Die Erfindung betrifft eine endständige Filtervorrichtung zur Reduktion von mikrobieller Belastung/mikrobiologischen Verunreinigungen in einem wässrigen Medium gemäß dem Oberbegriff des Anspruchs 1.

In Wasserleitungen, insbesondere in Warmwasserleitungen, besteht die Gefahr einer bakteriellen Infektion, da sich insbesondere bei erhöhten Temperaturen im Wasser Bakterien gut vermehren können. Besondere Gefahr geht von Infektionen mit Bakterien der Spezies *Legionella* aus, da diese auch bei Wassertemperaturen von über 50°C überleben und gefährlich für ältere, kranke und immunsupprimierte Personen sind. Eine andere Quelle von Verunreinigungen von Wasser stellen Pyrogene dar, die in kleinsten Mengen Fieber auslösen können, wenn sie in den Blutkreislauf gelangen. Zu den Pyrogenen gehören Endotoxine, dies sind Zellbruchstücke von gramnegativen Bakterien.

Um zu vermeiden, dass pathogen belastetes Wasser in Kontakt mit Wasserverbrauchern kommt, wurden mehrere technische Lösungen entwickelt. Möglich ist z.B. Wasser periodisch in den Wasserleitungen auf über 80°C zu erhitzen, eine sogenannte thermische Desinfektion. Andere Verfahren zur bakteriellen Reduktion beinhalten eine UV-Bestrahlung oder eine chemische Behandlung des Wassers. Diese Verfahren sind relativ aufwändig und finden oft an zentralen Stellen im Wasserleitungssystem statt, so dass das desinfizierte Wasser zwischen Behandlungspunkt und Entnahmestelle wieder verunreinigt werden kann.

Um dieses Problem zu lösen, wurden Filtervorrichtungen entwickelt, die nahe an der Entnahmestelle installiert werden können. So beschreibt WO 02/076589 A1 eine Vorrichtung zur Gewinnung von im Wesentlichen keimfreiem Wasser, bei der innerhalb eines durchströmbaren Filtergehäuses als Filter eine Vielzahl von porösen Hohlfasern angeordnet sind. Das Innere des Filtergehäuses und die Hohlfasermembranen können mit Bioziden beschichtet sein. Es ist bevorzugt, dass die Filtervorrichtung möglichst nahe an einer Wasseraustrittsstelle angeordnet ist.

Die US 4,636,307 A offenbart beispielsweise ein Hohlfaser-Filtermodul mit einem Hohlfaserbündel, wobei ein Teil der Hohlfasern aus einem hydrophoben Material und ein anderer Teil aus einem hydrophilen Material bestehen. Das Filtermodul kann in eine Filtervorrichtung eingesetzt werden. An einem Auslass des Hohlfaser-Filtermoduls werden die offenen Enden der Hohlfasern in eine Befestigungsmasse eingebettet.

Weitere Filtervorrichtungen sind aus der US 5,045,198 A, der EP 1 369 385 A1, der WO 2014/196567 A1 oder der J H06 39145 U bekannt.

Bei den vorgeschlagenen technischen Lösungen kann es allerdings immer noch zu einer retrograden Kontamination des Filters kommen. Der Raum zwischen Filteraustritt und unmittelbarem Wasseraustritt kann kontaminiert werden und diese Kontamination kann sich retrograd in den Filter ausdehnen. Der kontaminierte Raum kann z.B. im Gehäuse der Filtervorrichtung vorhanden sein, in Spülbrausen, Siebeinsätzen und im Duschkopf, also allen Räumen zwischen Filteraustritt und unmittelbarem Wasseraustritt. Das Filtrat verlässt dann zwar steril den Filter, wird aber u.U. wieder in diesen Räumen kontaminiert. Bakterien, die retrograd den Filter kontaminieren, siedeln sich z.B. auf der Grundplatte des Filters an und besiedeln von dort das Lumen der Hohlfasermembranen. Außerdem besteht die Gefahr, dass sich im Wasser enthaltene Luft während der Gebrauchsdauer der Filter als Luftblasen beispielsweise auf den Hohlfasermembranen absetzt, die effektive Filterfläche damit verringert und in zunehmendem Maße den Durchfluss behindert.

Deshalb ist eine Aufgabe dieser Erfindung, eine Filtervorrichtung zur Verfügung zu stellen, bei der eine retrograde Kontamination verhindert oder zumindest substantiell verringert wird und damit eine längere Lebensdauer der Filtervorrichtung erreicht wird. Eine weitere erfindungsgemäße Aufgabe ist, eine Filtervorrichtung mit einem dauerhaft effizienten Filtrationsverhalten zur Verfügung zu stellen.

Diese Aufgaben werden hinsichtlich der Vorrichtung gelöst durch eine endständige Filtervorrichtung zur Reduktion von mikrobiologischen Verunreinigungen, insbesondere von Bakterien und/oder Pyrogenen, in einem wässrigen Medium, insbesondere in Wasser, umfassend ein Gehäuse mit einem Eintrittsende zur Einleitung des wässrigen Mediums in die Filtervorrichtung und einem Austrittsende zur Ausleitung des wässrigen Mediums aus der Filtervorrichtung, wobei im Gehäuse Hohlfasermembranen angeordnet sind mit jeweils einem dem Eintrittsende und einem dem Austrittsende zugewandten Ende, wobei die dem Eintrittsende zugewandten Enden der Hohlfasermembranen geschlossen sind und die Hohlfasermembranen mit ihrem dem Austrittsende zugewandten Ende in eine Vergussmasse so fluiddicht eingebettet sind, dass sie durch die Vergussmasse hindurchtreten und an diesem Ende offen sind, dadurch gekennzeichnet, dass die porösen Hohlfasermembranen, vorzugsweise mit einer Porengröße von 0,01-2 µm und einer vorzugsweise parallelen Anordnung zur Längsachse des Gehäuses, mindestens eine erste Gruppe von hydrophilen Hohlfasermembranen umfassen, wobei die hydrophilen Hohlfasermembranen zur Anbindung von mikrobiologischen Verunreinigungendurch eine kationische Modifikation, funktionalisiert sind, und dass das Gehäuse, die Vergussmasse und die Hohlfasermembranen am Austrittsende der Filtervorrichtung bündig miteinander abschließen, wodurch der unmittelbare Austritt des wässrigen Mediums der Filtervorrichtung ausgebildet wird.

Die hydrophilen Hohlfasermembranen der Filtervorrichtung sind funktionalisiert und dadurch in der Lage, diverse mikrobielle Verunreinigungen wie Bakterien, behüllte Viren und/oder Pyrogene z.B. durch Adsorption zu binden. Bei der Funktionalisierung handelt es sich um eine kationische Modifikation. Die kationische Modifikation kann dadurch bewirkt sein, dass kationisch geladene Gruppen auf und/oder in den hydrophilen Membranen immobilisiert sind, beispielsweise über Einlagerung kationischer Substanzen in die Membranstruktur. Vorzugsweise erfolgt die Immobilisierung über chemische Bindung. Besonders bevorzugt sind an die hydrophilen Hohlfasermembranen Liganden gekoppelt, die die Funktion haben, die Klasse von Pyrogenen und/oder Bakterien zu binden. Auch Endotoxine, eine Subklasse der Pyrogene können durch die funktionalisierten hydrophilen Hohlfasermembranen gebunden werden. Die Funktionalisierung ermöglicht auch, dass behüllte Viren gebunden werden können, da die Proteine der Virushülle durch die funktionalisierte Hohlfasermembran gebunden werden. Durch die Funktionalisierung können also auch Partikel gebunden werden, die kleiner als die Porengröße der Hohlfasermembranen sind.

Die Filtervorrichtung weist dabei, zum Beispiel für den Transport, jeweils am Austrittsende und am Eintrittsende eine abnehmbare Verschlusskappe auf, die vorgesehen und dafür angepasst ist, die Filtervorrichtung gegenüber der Umgebung abzuschließen. Die abnehmbare Verschlusskappe kann durch eine Verschraubung oder durch eine Steckverbindung mit der Filtervorrichtung verbunden sein. Bevorzugt befindet sich am Austrittsende der Filtervorrichtung eine Schutzhülse, die mittels Steckverbindung befestigt ist. Am Eintrittsende der Filtervorrichtung befindet sich vorzugsweise eine Schraubkappe. Das Schraubgewinde, das zum Befestigen der Verschlusskappe genutzt wird, kann auch zum Anschluss der erfindungsgemäßen Vorrichtung an die wasserzuführende Leitung dienen.

Die Innenseite der Verschlusskappe an dem Eintrittsende und die Innenseite der Verschlusskappe an dem Austrittsende, ist mit einem Biozid behandelt oder enthält ein Biozid in Depotform, um so ein zwischenzeitliches Verschließen der Filtervorrichtung möglich zu machen, ohne dass es zu einer Verkeimung oder dergleichen kommt.

Im Sinne dieser Erfindung werden unter mikrobiologischen Verunreinigungen sowohl Bakterien verstanden als auch Teile von Bakterien, behüllte Viren und freigesetzte mikrobielle Stoffe. Solche freigesetzten Verbindungen können beispielsweise nach dem Absterben der Bakterien freigesetzt werden und auch zu pathologischen Reaktionen, z.B. Entzündungen führen. Entzündungsverursachende bakterielle Abfallstoffe oder Abscheidungsprodukte werden auch Pyrogene genannt. Beispiele sind Bestandteile der Zellmembran oder -wand, wie Lipopolysaccharide und Lipoteichonsäure.

Dadurch, dass die Schnittfläche der Vergussmasse gleichzeitig die unmittelbare Wasseraustrittstelle der Filtervorrichtung ist, reduziert sich der verbleibende Totraum auf das Kapillarinnere der Hohlfasermembran. Hierdurch wird eine deutliche Reduzierung der Gefahr einer Verkeimung der Filtervorrichtung erreicht. Durch den geringen Durchmesser der Kapillaren und dem damit vergleichsweise hohem Verhältnis von Wandfläche zu Flüssigkeitsvolumen ist es im bevorzugten Fall einer gleichzeitigen antimikrobiellen Ausstattung der Membranwand und einer Funktionalisierung der Hohlfasermembranen, wie im späteren beschrieben, möglich, eine retrograde Verkeimung, d.h. ein Keimwachstum ausgehend vom Wasseraustritt in die Hohlfasermembranen und in das Filterinnere zu minimieren.

Unter Wasseraustritt wird die Stelle des Wasserleitungssystems oder anderer Wasserführungsvorrichtungen verstanden, an der das Wasser das Leitungssystem oder die Vorrichtung verlässt und für den Verbraucher zugänglich wird, also beispielsweise der Auslass eines Wasserhahns oder ein Duschkopf. Durch die endständige Ausführung der erfindungsgemäßen Filtervorrichtung kann die Filtervorrichtung beispielsweise einen Duschkopf ersetzen. Nachdem das Wasser die Filtervorrichtung an deren unmittelbarem Wasseraustritt verlässt, trifft es bevorzugt direkt auf den Nutzer, z.B. einen zu waschenden Patienten. In einer Ausführung wird also der herkömmliche Duschkopf durch eine erfindungsgemäße endständige Filtervorrichtung ersetzt, die das Duschwasser filtert und gleichzeitig einen Duschkopf darstellt. Das Wasser tritt direkt aus den Hohlfasermembranen aus, ohne nachfolgende Toträume zwischen Austrittsende der Hohlfasermembranen und Wasserverbraucher zu passieren.

Die Filtervorrichtung hat ein Gehäuse mit einem ersten Ende, dem Eintrittsende, und einem zweiten Ende, dem Austrittsende oder Filtratende, welches den Wasserabfluss darstellt. Wenn das Wasser die Filtervorrichtung durchströmt, wird es durch die Wandung der hydrophilen Hohlfasermembranen hindurchgeleitet. Die Außenseite der Hohlfasermembranen ist die Seite, an der das unfiltrierte Wasser in die Hohlfasermembranen eintritt. Bei der Durchströmung der Hohlfasermembranen werden unerwünschte Substanzen, wie z.B. Pathogene, zurückgehalten.

Am ersten Ende der Filtervorrichtung sind die Hohlfasermembranen geschlossen, am Filtratende sind die Hohlfasermembranen offen. Die Hohlfasermembranen können in einer Ausführungsform schlaufenförmig gebogen sein, so dass zwei Enden einer Hohlfasermembran am Filtratende vorliegen und in der Vergussmasse eingebettet sind. Möglich ist auch, dass die Hohlfasermembranen am ersten Ende der Filtervorrichtung, dem Wassereinlass zugewandt, verklebt oder verschweißt sind.

Die Hohlfasermembranen sind in der Erstreckungsrichtung der Filtervorrichtung angeordnet. Dabei können die Hohlfasermembranen zu Bündeln von zueinander parallel angeordneten Hohlfasermembranen zusammengefasst sein. Bevorzugt liegen die Hohlfasermembranen als Matten vor, in denen alle Hohlfasermembranen parallel zueinander angeordnet und z.B. über Querfäden miteinander verbunden sind. Die Hohlfasermembranen sind vorzugsweise parallel zur Längsachse des Gehäuses der Filtervorrichtung angeordnet. Durch die parallele Anordnung wird erreicht, dass sich die aus den Membranen austretenden Wasserstrahlen nicht überschneiden. Dies ist wichtig, da in der vorliegenden Erfindung der Wasseraustritt aus den Hohlfasermembranen gleichzeitig der unmittelbare Austritt des gefilterten Wassers ist. Durch die parallele Anordnung wird also ein gleichmäßiger Wasserstrahl, bestehend aus einer Menge von kleinen Wasserstrahlen am Filteraustritt erreicht. Der Winkel zwischen der Schnittfläche der Vergussmasse und den Hohlfasermembranen kann in einer Ausführungsform in allen Betrachtungsrichtungen senkrecht zur Längsachse des Gehäuses im Wesentlichen 90° betragen. Die Form des Gehäuses, und damit auch dessen Verlauf der Längsachse, ist nicht auf eine geradlinige Form mit gleichbleibendem Querschnitt beschränkt, sondern kann ebenso eine freie Form, wie beispielsweise eine Form eines Duschkopfes oder eines Wasserhahns, mit veränderlichem Querschnitt aufweisen.

Die Hohlfasermembranen im Inneren der Filtervorrichtung weisen vorzugsweise einen Innendurchmesser von etwa 100-1000 µm, besonders bevorzugt von etwa 200-500 µm und insbesondere von 250-350 µm auf. Hohlfasermembranen mit einem derartigen Durchmesser erlauben einen ausreichenden Wasserfluss und die Anordnung von einer ausreichenden Anzahl von Hohlfasermembranen in der Filtervorrichtung. Vorzugsweise enthält die Filtervorrichtung 100-1000 hydrophile Hohlfasermembranen, besonders bevorzugt 200-300 hydrophile Hohlfasermembranen. Bevorzugt weisen die Hohlfasermembranen eine Länge von etwa 5-30 cm und besonders bevorzugt von 10-20 cm auf. Die Länge der Hohlfasermembranen bestimmt die Länge der Filtervorrichtung mit. Wenn die Hohlfasermembranen in Schlaufen bzw. U-förmig gebogen vorliegen mit einem geschlossenen U-förmigen Ende und offenen, in der Vergussmasse angeordneten Enden, entspricht die Länge der Filtervorrichtung circa dem Abstand zwischen den entgegengesetzten Enden der Hohlfasermembranen.

In einer bevorzugten Ausführungsform umfasst die Filtervorrichtung neben der mindestens einen ersten Gruppe von hydrophilen Hohlfasermembranen zusätzlich eine zweite Gruppe von hydrophoben Hohlfasermembranen. Die hydrophoben Hohlfasermembranen können, insbesondere durch eine kationische Modifikation, auch funktionalisiert sein. Durch die hydrophoben Hohlfasermembranen kann eine effiziente Entlüftung der Filtervorrichtung während des Betriebs erreicht werden.

Die hydrophilen und hydrophoben Hohlfasermembranen sind porös. In einer bevorzugten Ausführungsform bestehen die porösen Hohlfasermembranen aus Polymeren. Es kommt eine Vielzahl von herkömmlichen Polymeren in Frage. Voraussetzung ist, dass sich mit dem Polymer eine poröse Hohlfasermembran herstellen lässt. Besonders bevorzugt sind Polymere aus der Gruppe der Sulfonpolymere wie z.B. Polysulfon, Polyethersulfone oder Polyarylethersulfon, Polyamide, Cellulose und deren Derivate sowie Gemische. Besonders bevorzugt sind Hohlfasermembranen auf Basis von Polyamiden.

Für die Herstellung der hydrophilen Hohlfasermembranen werden Polymere oder Polymermischungen verwendet, die hydrophil sind. Als hydrophiles Polymer, welches insbesondere zusammen mit hydrophoben, die Membranstruktur aufbauenden Polymeren eingesetzt wird, kann ein stark hydrophiles Polymer, wie z. B. Polyvinylpyrrolidon oder Polyethylenglykol, verwendet werden.

Die hydrophilen Hohlfasermembranen sind insbesondere zur Mikrofiltration geeignet. Derartige Membranen weisen in der Regel Durchmesser der maximalen Trennpore zwischen 0,01 und 10 µm, bevorzugt zwischen 0,05 und 5 µm und besonders bevorzugt zwischen 0,1 µm und 2 µm auf. Der Durchmesser der maximalen Trennpore wird mittels der Blaspunktmethode (ASTM Nr. 128-61 und F 316-86) bestimmt, wozu beispielsweise die in der DE 3617724 A1 beschriebene Methode geeignet ist.

Die hydrophilen Hohlfasermembranen weisen vorzugsweise eine nominelle Porengröße von 0,05-5 µm, vorzugsweise von 0,05-2 µm, besonders bevorzugt von 0,2 bis 0,5 µm auf. Dabei wird die nominelle Pore über das Rückhaltevermögen der Membran gegenüber spezifischen Mikroorganismen definiert. So hält beispielsweise eine Membran mit einer nominellen Pore von 0,2 µm Bakterien der Gattung *Brevundimonas diminuta* zurück, eine Membran mit nomineller Pore von 0,45 µm Bakterien der Gattung *Serratia marcescens* usw. Weitere gebräuchliche nominelle Porengrößen sind 0,1 µm, 0,6 µm und 1,2 µm. Die Prüfung bzw. die Ermittlung der nominellen Porengrößen ist beispielsweise in der HIMA Vorschrift No. 3, Vol. 4, 1982 (Health Industry Manufacturers Association) beschrieben. Entsprechend der gewünschten Filtration wird eine passende Porengröße für die porösen Hohlfasermembranen gewählt. Für die Filtration von *Legionella* wird eine nominelle Porengröße von ≤ 0,2 µm benötigt. Hohlfasermembranen mit derartigen Porengrößen sind im besonderen Maße für die erfindungsgemäße Vorrichtung geeignet.

Zur Erzielung eines ausreichend hohen Durchsatzes durch die Filtervorrichtung und damit zur Erzielung einer hinreichenden Strahlwirkung weisen die verwendeten hydrophilen Hohlfasermembranen eine hohe Permeabilität und damit einen hohen Transmembranfluss für Wasser auf. Die hydrophilen Hohlfasermembranen weisen bevorzugt einen Transmembranfluss von mindestens 500 l/(m²h bar) auf, besonders bevorzugt von mindestens 1500 l/(m²h bar).

Die EP 1 038 570 B1 beschreibt mehrere technische Lösungen, um eine kationisch modifizierte Polymermembran zu erhalten. Weitere Möglichkeiten werden z.B. in der US 6 544 423 B1 beschrieben. Die diesbezüglichen Offenbarungen dieser Schriften werden durch Bezugnahme hier aufgenommen. Besonders bevorzugt sind die Hohlfasermembranen, insbesondere die hydrophilen Hohlfasermembranen, durch chemische Ankopplung von Diethylaminoethylgruppen (DEAE) an die Polymere der Hohlfasermembranen modifiziert.

Durch die Funktionalisierung lässt sich zum einen ein Bewachsen der sterilen Seite des Filters wirkungsvoll unterbinden (retrograde Verkeimung). Zum anderen werden die auf der Filtrationsseite der Membran abfiltrierten Keime gebunden. Nach dem Absterben bleiben auch die viel kleineren pyrogenen Bestandteile dieser Keime (Lipopolysaccharide LPS aus gram-negativen Bakterien und Lipoteichonsäure LTA aus gram-positiven Bakterien) an die Membran gebunden, die bei herkömmlichen Filtrationsmembranen zu einer hohen Endotoxinkonzentration im Filtrat führen.

Zur permanenten Entlüftung der Filtervorrichtung enthält die Filtervorrichtung vorzugsweise eine weitere Gruppe von hydrophoben Hohlfasermembranen. Die hydrophoben Hohlfasermembranen sind wasserundurchlässig, aber gasdurchlässig. Die weitere Gruppe von hydrophoben Hohlfasermembranen bewirkt, dass im Wasser enthaltene Luft effizient abtransportiert und der Filter permanent entlüftet wird und somit stets die vollständige Membranoberfläche für die Filtration zur Verfügung steht. Eine permanente Entlüftung des Filters ist daher wichtig für den optimalen Wasserdurchfluss durch die Filtervorrichtung und begünstigt ein dauerhaft effizientes Filtrationsverhalten. Die Anzahl der hydrophoben Hohlfasermembranen wird so gewählt, dass eine effektive Entlüftung des Filters stattfindet.

Geeignete Werkstoffe für die gasdurchlässigen, hydrophoben Hohlfasermembranen sind Polyolefine, beispielsweise Polypropylen oder Poly-4-methylpenten-1, Polyvinylidenfluorid oder Polytetrafluorethylen.

Hohlfasermembranen können ihre Hydrophobizität auch durch eine Behandlung, wie beispielsweise in der US 2002/0139095 A1 beschrieben, erhalten.

An der Filtratseite sind die Hohlfasermembranen offen und in die Vergussmasse eingebettet. Die Einbettung erfolgt gegenüber den Hohlfasermembranen und gegenüber der Innenwand des Gehäuses fluiddicht, so dass am Rand der Hohlfasermembranen kein ungefiltertes Wasser entweichen kann. Die Vergussmasse kann aus verschiedenen Kunststoffen hergestellt werden, beispielsweise aus vernetzbaren Harzen wie z.B. Epoxidharzen oder Polyurethanharzen. Vorzugsweise wird ein Polyurethanharz eingesetzt.

Um die Kontamination der Oberfläche der Vergussmasse zu vermeiden, kann auf und/oder in der Vergussmasse bevorzugt ein Biozid immobilisiert sein. Die Vergussmasse kann mit einem Biozid beschichtet sein oder es können Biozide bzw. biozid wirkende Stoffe in die Vergussmasse eingebracht werden. Die Kombination einer bioziden Vergussmasse mit der Abwesenheit von Toträumen nach Filteraustritt des Wassers verhindert besonders wirkungsvoll eine retrograde Kontamination des Filters.

Vorzugsweise ist auch die Innenseite, oder zumindest ein Teil der Innenseite des Gehäuses der Filtervorrichtung mit mindestens einem Biozid versehen. Dieses mindestens eine Biozid kann vorzugsweise in ein Teil des Gehäuses oder zumindest in ein Teil der Innenseite des Gehäuses eingebettet sein oder es erfährt zumindest ein Teil der Innenseite des Gehäuses eine Behandlung mit mindestens einem Biozid. Es ist auch möglich, ein Biozid im Gehäuse der Filtervorrichtung stromaufwärts vom Wasseraustritt zu deponieren.

Auch die Hohlfasermembranen können antimikrobielle Eigenschaften aufweisen, die durch eine Einbettung von mindestens einem Biozid in die Hohlfasermembran und/oder eine Beschichtung der Hohlfasermembranen mit mindestens einem Biozid erreicht werden.

Als Biozide kommen alle Stoffe in Frage, die das Wachstum von pathogenen Keimen unterbinden. Besonders bevorzugt ist die Verwendung von Stoffen, die Metallionen wie Kupfer- und Silberionen enthalten oder Polyelektrolyten, die von den Hohlfasern zurückgehalten werden. Beispiele für geeignete Biozide sind Polyhexamethylenguanidiniumsalz, vorzugsweise als Phosphat und/oder Chlorhexidin. Vorzugsweise werden geeignete Biozide in schwer löslicher Form deponiert. Vorteilhafterweise ist das Biozid ein immobilisiertes Biozid mit Depotwirkung. Hierdurch kann sichergestellt werden, dass das Biozid über einen langen Zeitraum seine Wirksamkeit entfaltet und so alle Keime innerhalb der Filtervorrichtung zuverlässig abtötet. Ein hierfür geeignetes Biozid kann beispielsweise in Tablettenform in der Vorrichtung eingebracht sein, so dass der oder die Wirkstoffe langsam im Verlauf des Auflösens der Tablette freigesetzt werden. Hierfür können herkömmliche Biozid-Tabletten eingesetzt werden. Ein Beispiel hierfür sind Tabletten, welche kontrolliert hypochlorige und hypobromige Säure als biozide Wirkstoffe enthalten. Ein weiteres Beispiel ist der Einsatz einer Chlortablette mit Depotwirkung. Alle genannten Wirkstoffe können als Beschichtung oder in Depotform eingesetzt werden. In einer bevorzugten Ausführung wird das oder werden die Biozide bereits bei der Herstellung der Vergussmasse oder des Gehäuses oder der Hohlfasermembranen in den Kunststoff eingebracht. Dies hat den Vorteil, dass nicht nur die äußere Oberfläche mit dem Biozid versehen ist.

Zwischen Gehäuse und Verschlusskappe, bevorzugt zwischen Gehäuse und der Verschlusskappe am Eintrittsende, kann eine Dichtung platziert werden. Diese kann insbesondere aus Gummi oder Kunststoff bestehen.

In der Ausführungsform, in der die Innenseite der Verschlusskappen, vor allem der Verschlusskappe am Austrittsende, mit einem Biozid behandelt wurde oder ein Biozid in Depotform enthält, ist es besonders vorteilhaft, wenn eine Biozidtablette in einen Kunststoff, wie beispielsweise einen Schaumstoff, eingebracht wird, der sich an der Innenseite der Verschlusskappe befindet. Dieser Kunststoff kann zum einen separat auf das Austrittsende der Filtervorrichtung bündig aufgelegt werden und anschließend mit der entsprechenden abnehmbaren Verschlusskappe verschlossen werden, oder zum anderen bereits in der abnehmbare Verschlusskappe eingebracht sein, so dass die Verschlusskappe zusammen mit dem Kunststoff auf das Austrittsende aufgesetzt werden kann.

Die erfindungsgemäße Filtervorrichtung ist für den Einmalgebrauch vorgesehen und hat eine Standzeit von mindestens drei Monaten, nach der sie durch eine neue Filtervorrichtung ersetzt werden muss. Bisher bekannte Filter haben eine durchschnittliche maximale Standzeit von einem Monat.

Die Filtervorrichtung kann an allen unmittelbaren Wasseraustrittspunkten im Wasserleitungssystem eingesetzt werden, beispielsweise als Duschkopf oder als Auslass eines Wasserhahns.

Das Gehäuse der Filtervorrichtung kann vorzugsweise aus polymeren Materialien bestehen, vorzugsweise aus Thermoplasten, wie z.B. Polypropylen, Polyethylen, Polyamid oder Polyvinylidenfluorid. An dem Ende des Gehäuses, an dem sich das Eintrittsende der Filtervorrichtung befindet, kann die Filtervorrichtung über geeignete Anschlüsse mit dem Wasserleitungssystem verbunden werden. Die Verbindung kann beispielsweise durch Verschraubung, Klemmen oder geeignete Adapter erfolgen.

In einer bevorzugten Ausführungsform der erfindungsgemäßen Vorrichtung weist das Filtergehäuse ein Gesamtaufnahmevolumen von etwa 25 bis etwa 1000 ml auf. Besonders bevorzugt ist ein Aufnahmevolumen von etwa 30 bis etwa 300 ml und insbesondere von etwa 30 bis etwa 50 ml.

Die erfindungsgemäße Filtervorrichtung ist für die Reduktion von mikrobiologischen Verunreinigungen in einem wässrigen Medium bestens geeignet.

### Kurzbeschreibung der Figur

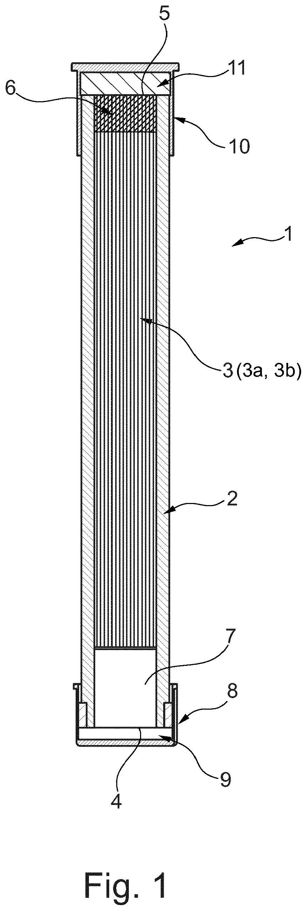

Figur 1 zeigt eine schematische Schnitt-Zeichnung einer Filtervorrichtung gemäß einer bevorzugten Ausführungsform der Erfindung.

### Detaillierte Beschreibung einer bevorzugten Ausführungsform

Die Erfindung wird anhand der nachfolgenden Abbildung näher erläutert. Figur 1 zeigt eine bevorzugte Ausführungsform der erfindungsgemäßen Filtervorrichtung 1 mit einem Gehäuse 2 in Form eines Hohlzylinders aus Thermoplasten, wie Polypropylen, in dem kationisch modifizierte, kreisförmige Hohlfasermembranen 3 auf Basis von Polyamiden in Form eines Bündels von ca. 200-300 Stück mit einer Länge von 10-20 cm in Längsrichtung angeordnet sind. Bei den im Bündel enthaltenen porösen Hohlfasermembranen 3 mit einem Innendurchmesser von ca. 250-350 µm handelt es sich zum einen um hydrophile Hohlfasermembranen 3a aus Polymeren, wie Polyvinylpyrrolidon, mit einer nominellen Porengröße von 0,01-2 µm und zum anderen um hydrophobe Hohlfasermembranen 3b aus Polyolefine, wie Polypropylen, über die in der Anwendung eine Entlüftung des Inneren der Filtervorrichtung 1 erfolgen kann. Die hydrophilen Hohlfasermembranen 3a weisen einen Transmembranfluss von 1500l/(m²h bar) auf. Die Filtervorrichtung 1 hat ein kreisförmiges Eintrittsende 4 und ein kreisförmiges Austrittsende 5. Am Austrittsende 5 sind die Enden der Hohlfasermembranen 3 in eine Vergussmasse 6 aus Kunststoffen, wie Epoxidharz, in das ein Biozid, wie Chlorhexidin, bereits bei der Herstellung eingebracht wurde, so fluiddicht eingebettet, dass sie durch diese hindurchtreten und an ihrem dem Austrittsende 5 der Filtervorrichtung 1 zugewandten Ende offen sind und mit dem Austrittsende 5 der Filtervorrichtung 1 zugewandten Ende des Gehäuses 2 bündig abschließen. An ihrem dem Eintrittsende 4 der Filtervorrichtung 1 zugewandten Ende sind die Hohlfasermembranen 3 in U-förmige Schlaufen gelegt und hierdurch an diesem Ende geschlossen. Am Eintrittsende 4 der Filtervorrichtung 1 ist zwischen dem Ende des Gehäuses 2 und dem Ende der Hohlfasermembranen 3 ein Hohlraum 7 vorgesehen, über den eine gleichmäßige Verteilung des einströmenden Wassers auf die Hohlfasermembranen 3 erreicht wird. Die in der Figur 1 gezeigte Filtervorrichtung 1 weist am Eintrittsende 4 eine Schraubkappe 8 auf, die über eine Dichtung 9 aus einem gebräuchlichem Dichtmaterial, wie Gummi, dicht am Gehäuseende anliegt und mit einem Schraubgewinde am Gehäuse 2 befestigt ist. Die Innenseite der Schraubkappe 8 ist mit einem Biozid in schwer löslicher Form beschichtet. Ebenso ist in das Gehäuse 2 ein Biozid eingebracht worden. Das Schraubgewinde am Gehäuse 2 ist eine standardisierte Verbindung, wie ein metrisches Gewinde, welches auch an einen Wasseranschluss angebracht werden kann. Am Austrittsende 5 wird eine zylindrische Schutzhülse 10 mit einer Steckverbindung gezeigt, die zusammen mit einem in der Schutzhülse 10 befindlichen Schaumstoffstück 11 aus Kunststoff das Austrittsende 5 abschließt und gegen Verunreinigungen schützt. Das Schaumstoffstück 11 enthält ein Biozid mit Depotwirkung, wie eine Chlortablette, und ist separat zu der Schutzhülse 10 aufgelegt.

## Patentansprüche

1. Endständige Filtervorrichtung (1) zur Reduktion von mikrobiologischen Verunreinigungen, insbesondere von Bakterien und/oder Pyrogenen, in einem wässrigen Medium, insbesondere in Wasser, umfassend ein Gehäuse (2) mit einem Eintrittsende (4) zur Einleitung des wässrigen Mediums in die Filtervorrichtung (1) und einem Austrittsende (5) zur Ausleitung des wässrigen Mediums aus der Filtervorrichtung (1), wobei im Gehäuse (2) Hohlfasermembranen (3) angeordnet sind mit jeweils einem dem Eintrittsende (4) und einem dem Austrittsende (5) zugewandten Ende, wobei die dem Eintrittsende (4) zugewandten Enden der Hohlfasermembranen (3) geschlossen sind und die Hohlfasermembranen (3) mit ihrem dem Austrittsende (5) zugewandten Ende in eine Vergussmasse (6) so fluiddicht eingebettet sind, dass sie durch die Vergussmasse (6) hindurchtreten und an diesem Ende offen sind, wobei
das Gehäuse (2), die Vergussmasse (6) und die Hohlfasermembranen (3) am Austrittsende (5) der Filtervorrichtung (1) bündig miteinander abschließen, wodurch der unmittelbare Austritt des wässrigen Mediums der Filtervorrichtung (1) ausgebildet wird; und die porösen Hohlfasermembranen (3), vorzugsweise mit einer Porengröße von 0,01-2 µm und einer vorzugsweise parallelen Anordnung zur Längsachse des Gehäuses (2), mindestens eine erste Gruppe von hydrophilen Hohlfasermembranen (3a) umfassen,
**dadurch gekennzeichnet, dass**
die hydrophilen Hohlfasermembranen (3a) zur Anbindung von mikrobiologischen Verunreinigungen durch eine kationische Modifikation funktionalisiert sind; und
eine abnehmbare Verschlusskappe (8) an dem Eintrittsende (4) sowie eine entsprechende Anbindung am Gehäuse (2), vorzugsweise eine Schraubkappe (8) mit Schraubverbindung, vorgesehen und dafür angepasst ist, die Filtervorrichtung gegenüber der Umgebung abzuschließen und eine abnehmbare Verschlusskappe (10) an dem Austrittsende (5) sowie eine entsprechende Anbindung am Gehäuse (2), vorzugsweise eine Steck-Schutzhülse (10) mit Steckverbindung, vorgesehen und dafür angepasst ist, die Filtervorrichtung gegenüber der Umgebung abzuschließen, wobei die Innenseite der Verschlusskappe (8) an dem Eintrittsende (4) und die Innenseite der Verschlusskappe (10) an dem Austrittsende (5) mit einem Biozid behandelt wurde und/oder ein Biozid in Depotform enthält.

2. Filtervorrichtung (1) nach Anspruch 1, **dadurch gekennzeichnet, dass** die Hohlfasermembranen (3) zusätzlich eine zweite Gruppe von hydrophoben Hohlfasermembranen (3b) umfassen, die durch eine kationische Modifikation funktionalisiert sind.

3. Filtervorrichtung (1) nach einem der Ansprüche 1 bis 2, **dadurch gekennzeichnet, dass** die Hohlfasermembranen (3), insbesondere die hydrophilen Hohlfasermembranen (3a), mit Diethylaminoethylgruppen modifiziert sind.

4. Filtervorrichtung (1) nach einem der Ansprüche 1 bis 3, **dadurch gekennzeichnet, dass** die Hohlfasermembranen (3) antimikrobielle Eigenschaften aufweisen, die durch eine Einbettung von Bioziden in die Hohlfasermembranen (3) und/oder eine Beschichtung der Hohlfasermembranen (3) mit Bioziden erreicht werden.

5. Filtervorrichtung (1) nach einem der Ansprüche 1 bis 4, **dadurch gekennzeichnet, dass** die Vergussmasse (6) eine antibakterielle Eigenschaft aufweist, die durch eine Einbettung von Bioziden in die Vergussmasse (6) und/oder eine Beschichtung der Vergussmasse (6) mit Bioziden erreicht werden.

6. Filtervorrichtung (1) nach einem der Ansprüche 1 bis 5, **dadurch gekennzeichnet,**
**dass** zumindest ein Teil der Innenseite des Gehäuses (2) eine antibakterielle Eigenschaft aufweist, die durch eine Einbettung von mindestens einem Biozid in die Innenseite und/oder eine Behandlung der Innenseite mit mindestens einem Biozid erreicht wird und/oder
**dass** ein Biozid im Gehäuse (2) der Filtervorrichtung (1) stromaufwärts vom Austrittsende (5) deponiert ist.

7. Filtervorrichtung (1) nach einem der Ansprüche 1 bis 6, **dadurch gekennzeichnet, dass** das Gehäuse (2) an dem Eintrittsende (4) eine Anbindung zum Anschluss an ein Wasserleitungssystem aufweist, wobei die Anbindung ebenso für die Anbindung der abnehmbaren Verschlusskappe (8) genutzt werden kann.

## Claims

1. A terminal filter device (1) for reducing microbiological contaminants, in particular bacteria and/or pyrogens, in an aqueous medium, in particular in water, comprising a housing (2) with an entry end (4) for introducing the aqueous medium into the filter device (1) and an exit end (5) for discharging the aqueous medium from the filter device (1), wherein hollow fiber membranes (3) are arranged in the housing (2), each having an end facing the entry end (4) and an end facing the exit end (5), wherein the ends of the hollow fiber membranes (3) facing the entry end (4) are closed, and the hollow fiber membranes (3) are embedded with their end facing the exit end (5) in a casting compound (6) in such a fluid-tight manner that they pass through the casting compound (6) and are open at this end, wherein
the housing (2), the casting compound (6) and the hollow fiber membranes (3) end in a flush manner with each other at the exit end (5) of the filter device (1), whereby the direct exit of the aqueous medium of the filter device (1) is formed; and the porous hollow fiber membranes (3), preferably with a pore size of 0.01-2 µm and a preferably parallel arrangement to the longitudinal axis of the housing (2), comprise at least a first group of hydrophilic hollow fiber membranes (3a),
**characterized in that**
the hydrophilic hollow fiber membranes (3a) are functionalized for binding microbiological contaminants by a cationic modification; and
a removable closing cap (8) at the entry end (4) and a corresponding connection to the housing (2), preferably a screw cap (8) with screw connection, is provided and adapted to close the filter device from the environment, and a removable closing cap (10) at the exit end (5) and a corresponding connection to the housing (2), preferably a plug-in protective sleeve (10) with plug-in connection, is provided and adapted to close the filter device from the environment, wherein the inside of the closing cap (8) at the entry end (4) and the inside of the closing cap (10) at the exit end (5) has been treated with a biocide and/or contains a biocide in depot form.

2. The filter device (1) according to claim 1, **characterized in that** the hollow fiber membranes (3) additionally comprise a second group of hydrophobic hollow fiber membranes (3b) functionalized by a cationic modification.

3. The filter device (1) according to one of claims 1 to 2, **characterized in that** the hollow fiber membranes (3), in particular the hydrophilic hollow fiber membranes (3a), are modified with diethylaminoethyl groups.

4. The filter device (1) according to one of claims 1 to 3, **characterized in that** the hollow fiber membranes (3) have antimicrobial properties which are achieved by embedding biocides in the hollow fiber membranes (3) and/or coating the hollow fiber membranes (3) with biocides.

5. The filter device (1) according to one of claims 1 to 4, **characterized in that** the casting compound (6) has an antibacterial property, which is achieved by embedding biocides in the casting compound (6) and/or coating the casting compound (6) with biocides.

6. The filter device (1) according to one of claims 1 to 5, **characterized in that** at least a part of the inside of the housing (2) has an antibacterial property, which is achieved by embedding at least one biocide in the inside and/or treating the inside with at least one biocide and/or
that a biocide is deposited in the housing (2) of the filter device (1) upstream of the exit end (5).

7. The filter device (1) according to one of claims 1 to 6, **characterized in that** the housing (2) has a connection at the entry end (4) for connection to a water pipe system, wherein the connection can also be used for connection of the removable closing cap (8).

## Revendications

1. Dispositif de filtre terminal (1) destiné à la réduction des impuretés microbiologiques, en particulier des bactéries et/ou pyrogènes, dans un milieu aqueux, en particulier dans de l'eau, comprenant un boîtier (2) pourvu d'une extrémité d'entrée (4) destinée à l'introduction du milieu aqueux dans le dispositif de filtre (1) et d'une extrémité de sortie (5) destinée à l'évacuation du milieu aqueux hors du dispositif de filtre (1), dans le boîtier (2) étant disposées des membranes à fibres creuses (3), ayant respectivement une extrémité tournée vers l'extrémité d'entrée (4) et une autre tournée vers l'extrémité de sortie (5), dans lequel les extrémités des membranes à fibres creuses (3) tournées vers l'extrémité d'entrée (4) sont fermées et les membranes à fibres creuses (3) avec leur extrémité tournée vers l'extrémité de sortie (5) sont incorporées dans une masse de scellement (6) de manière tellement étanche aux fluides qu'elles traversent la masse de scellement (6) et sont ouvertes à cette extrémité, dans lequel
le boîtier (2), la masse de scellement (6) et les membranes à fibres creuses (3) se ferment réciproquement à affleurement à l'extrémité de sortie (5) du dispositif de filtre (1), moyennant quoi la sortie directe du milieu aqueux du dispositif de filtre (1) est formée ; et les membranes à fibres creuses poreuses (3), de préférence ayant une taille de pores de 0,01 à 2 µm et un agencement de préférence parallèle par rapport à l'axe longitudinal du boîtier (2), comprennent au moins un premier groupe de membranes à fibres creuses hydrophiles (3a),
**caractérisé en ce que**
les membranes à fibres creuses hydrophiles (3a) pour la liaison d'impuretés microbiologiques sont fonctionnalisées par une modification cationique ; et
un capuchon de fermeture amovible (8) à l'extrémité d'entrée (4) et une liaison correspondante sur le boîtier (2), de préférence un capuchon vissable (8) à liaison par vissage, sont prévus et adaptés pour refermer le dispositif de filtre vis-à-vis de l'environnement et un capuchon de fermeture amovible (10) à l'extrémité de sortie (5) et une liaison correspondante sur le boîtier (2), de préférence une douille de protection emboîtable (10) à liaison par emboîtement, sont prévus et adaptés pour refermer le dispositif de filtre vis-à-vis de l'environnement, le côté intérieur du capuchon de fermeture (8) à l'extrémité d'entrée (4) et le côté intérieur du capuchon de fermeture (10) à l'extrémité de sortie (5) ont été traités avec un biocide et/ou contiennent un biocide sous forme dépôt.

2. Dispositif de filtre (1) selon la revendication 1, **caractérisé en ce que** les membranes à fibres creuses (3) comprennent en plus un deuxième groupe de membranes à fibres creuses hydrophobes (3b), qui sont fonctionnalisées par une modification cationique.

3. Dispositif de filtre (1) selon l'une des revendications 1 à 2, **caractérisé en ce que** les membranes à fibres creuses (3), en particulier les membranes à fibres creuses hydrophiles (3a), sont modifiées par des groupes diéthylaminoéthyle.

4. Dispositif de filtre (1) selon l'une des revendications 1 à 3, **caractérisé en ce que** les membranes à fibres creuses (3) présentent des propriétés antimicrobiennes qui sont obtenues grâce à une incorporation de biocides dans les membranes à fibres creuses (3) et/ou un revêtement des membranes à fibres creuses (3) avec des biocides.

5. Dispositif de filtre (1) selon l'une des revendications 1 à 4, **caractérisé en ce que** la masse de scellement (6) présente une propriété antibactérienne, qui est obtenue grâce à une incorporation de biocides dans la masse de scellement (6) et/ou un revêtement de la masse de scellement (6) avec des biocides.

6. Dispositif de filtre (1) selon l'une des revendications 1 à 5, **caractérisé en ce que**
au moins une partie du côté interne du boîtier (2) présente une propriété antibactérienne, qui est obtenue par une incorporation d'au moins un biocide dans le côté interne et/ou un traitement du côté interne avec au moins un biocide et/ou
un biocide est déposé dans le boîtier (2) du dispositif de filtre (1) en amont de l'extrémité de sortie (5).

7. Dispositif de filtre (1) selon l'une des revendications 1 à 6, **caractérisé en ce que** le boîtier (2) présente à l'extrémité d'entrée (4) une liaison pour le raccordement à un système de conduite d'eau, dans lequel la liaison peut être utilisée pareillement pour la liaison du capuchon de fermeture amovible (8).
